# EUROPEAN PATENT SPECIFICATION

(11) **EP 2 578 458 B1**
(45) Date of publication and mention of the grant of the patent: **19.11.2014**
(21) Application number: 11184026.0
(22) Date of filing: 05.10.2011
(51) Int. Cl.: B60S 1/38, B60S 1/40

(54) **Windshield wiper connector and windshield wiper connection assembly**
Scheibenwischerverbinder und Scheibenwischerverbindungsanordnung
Connecteur d'essuie-glace et ensemble formant connecteur d'essuie-glace

(43) Date of publication of application: 10.04.2013
(73) Proprietor: UNIPOINT ELECTRIC MFG. CO., LTD., Taipei City 106 (TW)
(72) Inventor: Chien, Ching-Chuan, Taipei City 1o6 (TW)
(74) Representative: advotec.

(56) References cited:
- EP-A1- 1 849 666
- WO-A2-2011/040743
- DE-U1-202008 006 383
- US-A1- 2007 067 941

## Description

### BACKGROUND OF THE INVENTION

### 1. Field of the Invention

The present invention relates to a windshield wiper connector and windshield wiper connection assembly, and more particularly to a windshield wiper connector and windshield wiper connection assembly using a flexible fastening body to fasten a windshield wiper arm.

### 2. Description of the Related Art

Automobiles are important transportation vehicles and now in widespread use. More specifically, it does not only take it as the means of transportation, but also has an effect of keeping out wind and rain more by comparing bicycles and motorcycles during rain.

Each automobile is equipped with windshield wipers and wipes rain during a rainy day so as to enhance the driving safety. The windshield wipers are connected to a windshield wiper motor through a windshield wiper connection assembly, thereby achieving a goal of wiping water drops on a surface of a glass.

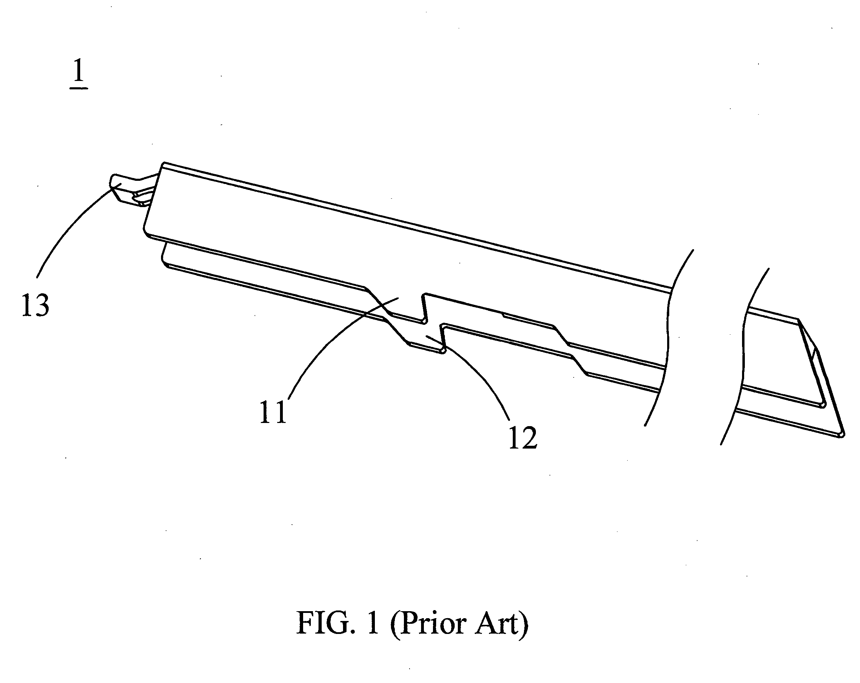

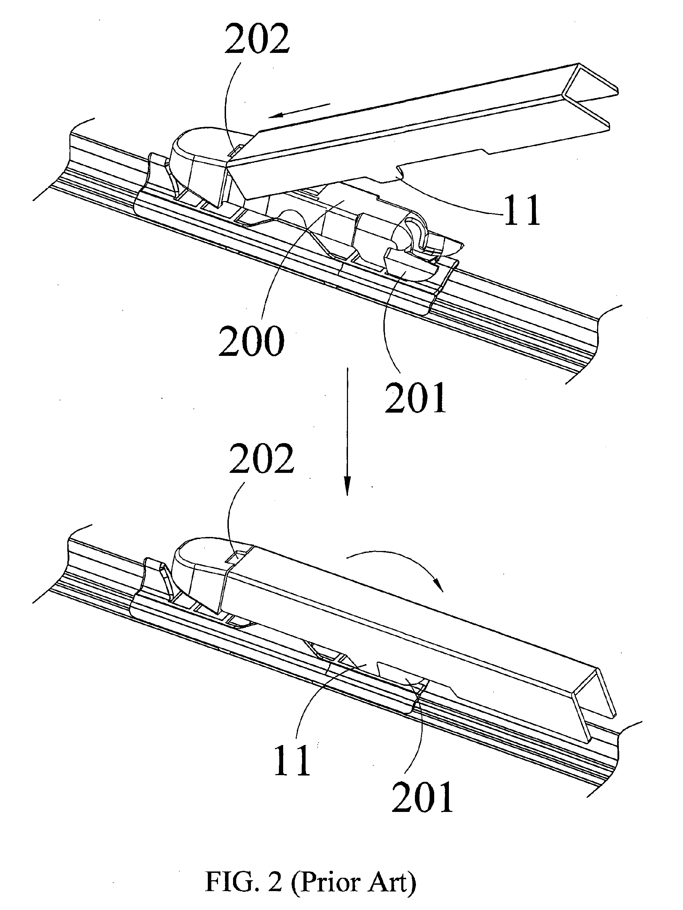

With reference to FIG. 1 and FIG. 2 for a schematic diagram of a conventional windshield wiper arm and a schematic diagram of a windshield wiper connection assembly is depicted. The windshield wiper arm 1 comprises a first barb portion 11, a second barb portion 12 and a protruding portion 13. The first barb portion 11 and the second barb portion 12 can be respectively disposed at two sides of the windshield wiper arm 1. The protruding portion 13 can be disposed to an end of the windshield wiper arm 1. Components of the windshield wiper connection assembly comprise a windshield wiper connector 200 and a windshield wiper arm 1. The conventional windshield wiper connector 200 is designed with a slot 202 at a front while two sides of a rear are disposed with fixing components 201 made of hardness materials. While assembling with the windshield wiper arm 1, the windshield wiper arm 1 is firstly inserted into the slot 202 of the front of the windshield wiper connector 200, and then the windshield wiper arm 1 is downwardly pressed to utilize the fixing components 201 at two sides of the rear of the windshield wiper connector 200 to wedge the windshield wiper arm 1.

Another windshield wiper connector is known from US2007/0067941 A1.

According to the foregoing depiction, the windshield wiper connector that is used for connecting the windshield wiper arm in prior art has the following defects:
1. While detaching the conventional windshield wiper connector from the windshield wiper arm, a user must press the fixing components to separate the windshield wiper arm from the windshield wiper connector. The assembled windshield wiper arm would cover the windshield wiper connector to allow the fixing components locating below the windshield wiper arm. Consequently, when the user would like to press the fixing components, the user must use his (or her) hand to stretch into a bottom of the windshield wiper connector to find out a position of the fixing components. It is difficult to touch and may easily harm the hand of the user so as to cause inconvenience.
2. In the foregoing prior art, the fixing components at the rear of the windshield wiper connector are made of hardness materials. While assembling and detaching the barb portions of the windshield wiper arm, magnitude forces must be imposed to wedge or separate the fixing components and the barb portion. Consequently, the fixing components may be damaged by the barb portions to cause abrasion. Further, the fastening force may be gradually reduced. The windshield wiper connector may not be stably installed with the windshield wiper arm due to the abrasion.

### SUMMARY OF THE INVENTION

In view of the shortcomings of the prior art, the inventor(s) of the present invention based on years of experience in the related industry to conduct extensive researches and experiments, and finally developed a windshield wiper connector and a windshield wiper connection assembly as a principle objective to overcome the problems of unstably installing both that are worn due to long term usage.

To achieve the foregoing objective, the windshield wiper connector is provided and comprises a main body, a lodging device and a flexible fastening device. The lodging device is disposed to a rear of the main body and lodged with a barb portion of a windshield wiper arm. One end of the flexible fastening device is connected below a front of the main body while another end of the flexible fastening device is an extending end upwardly extended toward an upper side of the main body. The flexible fastening device leans against a protruding portion of the windshield wiper arm. After the lodging device is hooked with the barb portion, the windshield wiper arm is rotated by taking a hooking portion as an axis so that the extending end of the flexible fastening is propped by the protruding portion to perform a deformation toward a direction being distant from the protruding portion. When the protruding portion crosses the extending end, the extending end is restored from a deformation state to fasten the protruding portion, thereby fixing the windshield wiper arm on the main body.

The flexible fastening device further comprises a flexible portion and a fastening portion. One end of the flexible portion is disposed below a front of the main body while another end is extended toward an upper side of the main body and connected to the fastening portion to form an extending end. The fastening portion comprises a guiding surface. When the extending end propped by the protruding portion performs a deformation, the guiding surface is in contact with the protruding portion, and the protruding portion is guided by the surface to cross the extending end.

The flexible portion and the fastening portion are connected to form a cavity. When the protruding portion of the windshield wiper arm is approached to the flexible fastening device, the protruding portion leans against the guiding surface to allow the flexible portion to firstly perform the deformation toward the direction being distant from the protruding portion. After the protruding portion crosses the guiding surface, it falls into the cavity leaning against each other so that the fastening portion is hooked with the protruding portion.

According to the objective of the invention, a windshield wiper connection assembly is further provided and comprises a windshield wiper connector and a windshield wiper arm. The windshield wiper connector comprises a main body. Two sides of a rear of the main body are disposed with a first lodging portion and a second lodging portion. A front of the main body is disposed with a flexible fastening body. The flexible fastening body comprises a flexible portion and a fastening portion. The fastening portion further comprises a guiding surface. Two sides of the windshield wiper arm are disposed with a first barb portion and a second barb portion. One end of the windshield wiper arm is disposed with a protruding portion. The first lodging portion and the second lodging portion are respectively hooked with the first barb portion and the second barb portion so that the windshield wiper arm is rotated by taking a hooking portion as an axis. The protruding portion is gradually approached to the guiding surface of the fastening portion and mutually leans against each other to drive the flexible portion to perform a deformation toward a direction being distant from the protruding portion. After the protruding portion crosses the guiding surface and the flexible portion is restored from a deformation state, the fastening portion is fastened to the protruding portion, thereby fixing the windshield wiper arm on the main body.

One end of the flexible portion is disposed below a front of the main body while another end is extended toward an upper side of the main body and connected to the fastening portion to become an extending end. When the extending end propped by the protruding portion performs a deformation, the guiding surface of the fastening portion is in contact with the protruding portion and crosses the extending end.

The flexible portion and the fastening portion are connected to form a cavity. When the protruding portion of the windshield wiper arm leans against the guiding surface, the flexible portion performs the deformation toward the direction being distant from the protruding portion. After the protruding portion crosses the guiding surface and falls into the cavity mutually leaning against each other, the fastening portion is fastened to the protruding portion.

The windshield wiper connector and the windshield wiper connection assembly according to the invention have one or more advantages:
(1) When the windshield wiper connector of the invention is assembled with the windshield wiper arm, the lodging device is hooked with the barb portion of the windshield wiper arm. The windshield wiper arm is rotated by taking a hooking portion as an axis so that the protruding portion crosses the extending end of the flexible fastening device. With the lodging devices hooked with the barb portions and the flexible fastening device hooked with the protruding portion, the windshield wiper arm is fixed to the windshield wiper connector. Since the windshield wiper connector mainly uses the flexible fastening device capable of being deformed to fasten the windshield wiper arm, the flexible fastening device is located onto the windshield wiper connector. While detaching the windshield wiper connector from the windshield wiper arm, a user only twists the flexible fastening device to easily detach the windshield wiper connector from the windshield wiper arm, thereby increasing the convenience in use.
(2) The windshield wiper connector of the invention does not only utilize the lodging device (the first lodging portion and the second lodging portion) to lodge the windshield wiper arm, but also installs the flexible fastening device capable of being deformed to fix the windshield wiper arm. The installation mainly uses the deformation of the flexible fastening device to fix the windshield wiper arm on the windshield wiper connector. Therefore, there is no problem of generating the wearing on the fixing components damaged by the barbs of the windshield wiper arm that is caused by imposing magnitude forces to connect or separate from the windshield wiper arm while assembling or detaching the conventional windshield wiper connector.

### BRIEF DESCRIPTION OF THE DRAWINGS

FIG. 1 is a schematic diagram of a conventional windshield wiper arm;
FIG. 2 is a schematic diagram of a conventional windshield wiper connection assembly;
FIG. 3 is a first schematic diagram of a windshield wiper connector according to an embodiment of the invention;
FIG. 4 is a second schematic diagram of a windshield wiper connector according to an embodiment of the invention;
FIG. 5 is a first schematic diagram of assembling a windshield wiper connector with a windshield wiper arm according to an embodiment of the invention;
FIG. 6 is a second schematic diagram of assembling a windshield wiper connector with a windshield wiper arm according to an embodiment of the invention;
FIG. 7 is a third schematic diagram of assembling a windshield wiper connector with a windshield wiper arm according to an embodiment of the invention;
FIG. 8 is a fourth schematic diagram of assembling a windshield wiper connector with a windshield wiper arm according to an embodiment of the invention;
FIG. 9 is a first schematic diagram of detaching a windshield wiper connector from a windshield wiper arm according to an embodiment of the invention;
FIG. 10 is a second schematic diagram of detaching a windshield wiper connector from a windshield wiper arm according to an embodiment of the invention; and
FIG. 11 is a third schematic diagram of detaching a windshield wiper connector from a windshield wiper arm according to an embodiment of the invention.

### DETAILED DESCRIPTION OF THE PREFERRED EMBODIMENTS

The foregoing and other technical characteristics of the present invention will become apparent with the detailed description of the preferred embodiments and the illustration of the related drawings.

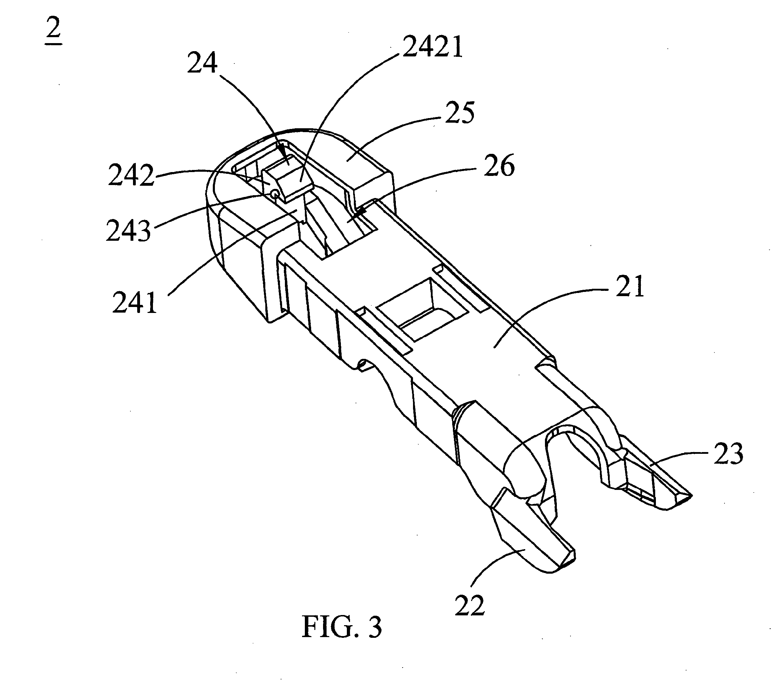

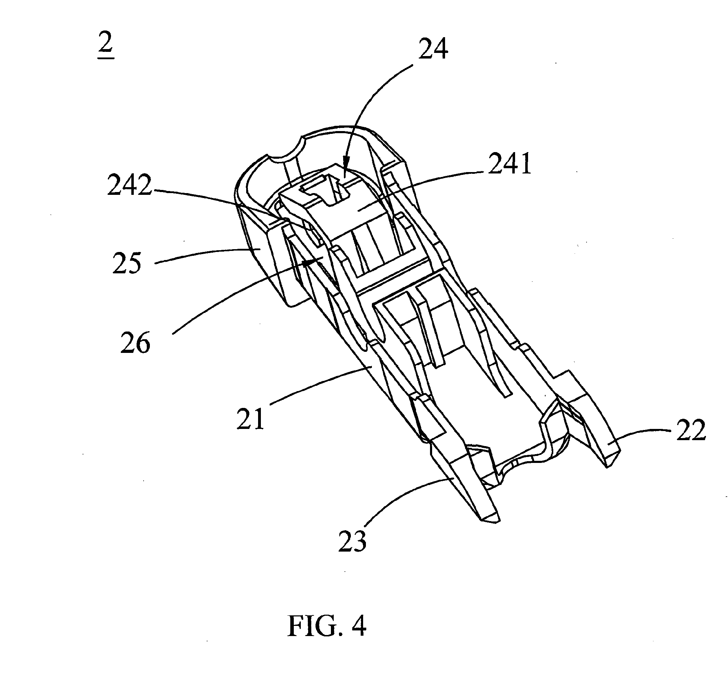

With reference to FIG. 3 and FIG. 4 for a first schematic diagram and a second schematic diagram of a windshield wiper connector in accordance with an embodiment of the invention are depicted. The first schematic diagram is a top view three-dimensional diagram of the windshield wiper connector 2, and the second schematic diagram is a bottom view three-dimensional diagram of the windshield wiper connector 2. The windshield wiper connector 2 of the embodiment comprises a main body 21, a first lodging portion 22, a second lodging portion 23, a flexible fastening body 24 and a containing portion 25. The main body 21 can be, but not limited to, an elongated structure. The first lodging portion 22 and the second lodging portion 23 can be respectively disposed to two sides of a rear of the main body 21. The shapes of hooking the first lodging portion 22 and the second lodging portion 23 with the first barb portion 11 and the second barb portion 12 of the windshield wiper arm 1 respectively match with the barb portions 11 and 12. The first lodging portion 22 and the second lodging portion 23 are flexible objects. The containing portion 25 can be connected to a front of the main body 21 and defines a containing space 26 for containing the flexible fastening body 24 together with the body. In the embodiment, the containing portion 25 is a U-shaped structure and can be, but not limited to actual practice, other structures capable of defining the containing space 26. The flexible fastening body 24 comprises a flexible portion 241 and a fastening portion 242. One end of the flexible portion 241 can be connected below the front of the main body 21, and another end of the flexible portion 241 is upwardly extended toward an upper side of the main body 21 and connected to the fastening portion 242 to become an extending end. The flexible fastening body 24 can be disposed in the containing space 26. The fastening portion 242 protrudes to the containing space 26. A recess 243 is formed at an intersection between the flexible portion 241 and the fastening portion 242. The size of the containing space 26 can allow the flexible fastening body 24 to perform a flexible deformation at suitable degrees so that the protruding portion 13 of the windshield wiper arm 1 to cross it. The fastening portion 242 further comprises a guiding surface 2421. When the guiding surface 2421 is deformed by the propping of the protruding portion 13, the surface is guided to cross the extending end. In the embodiment, the guiding surface 2421 is an oblique plane toward the protruding portion 13 and can be other patterns, such as an arc plane, a ladder plane, or the like, during the actual practice. In the subsequent depiction, the first lodging portion 22 and the second lodging portion 23 can also be called a lodging device. The flexible fastening body 24 can also be called a flexible fastening device.

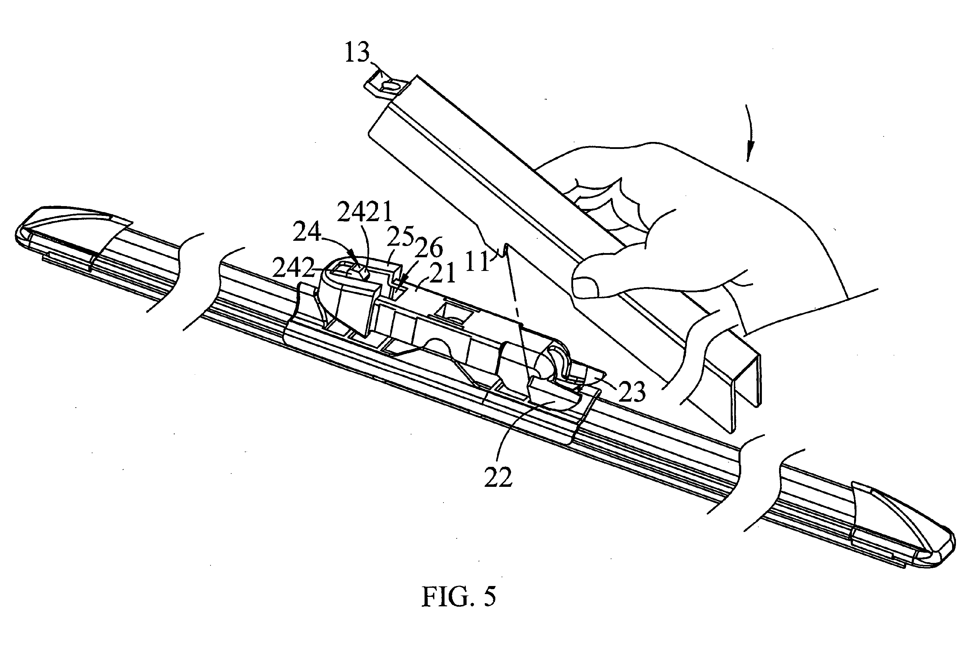

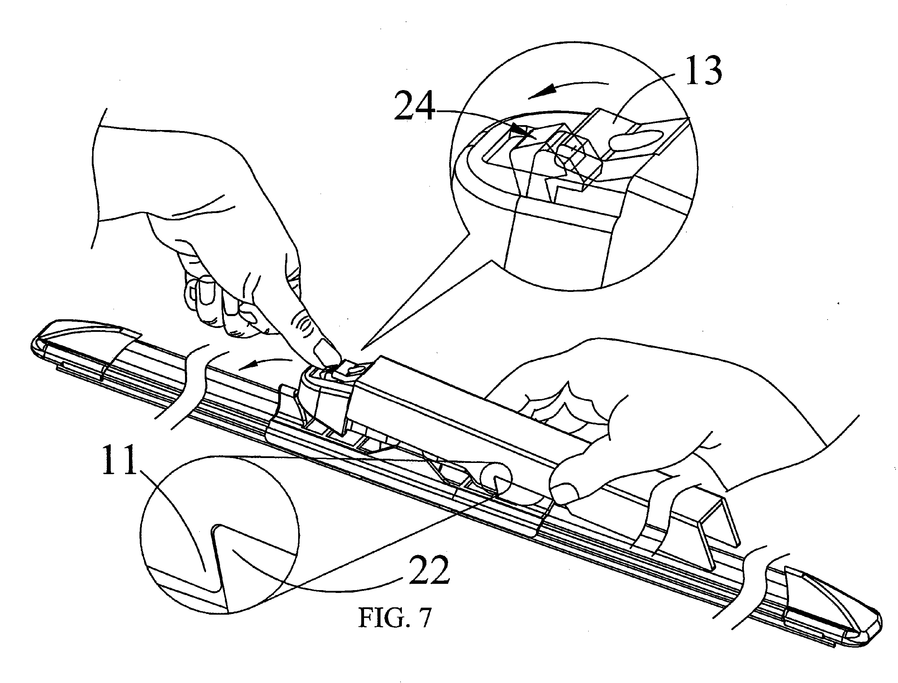

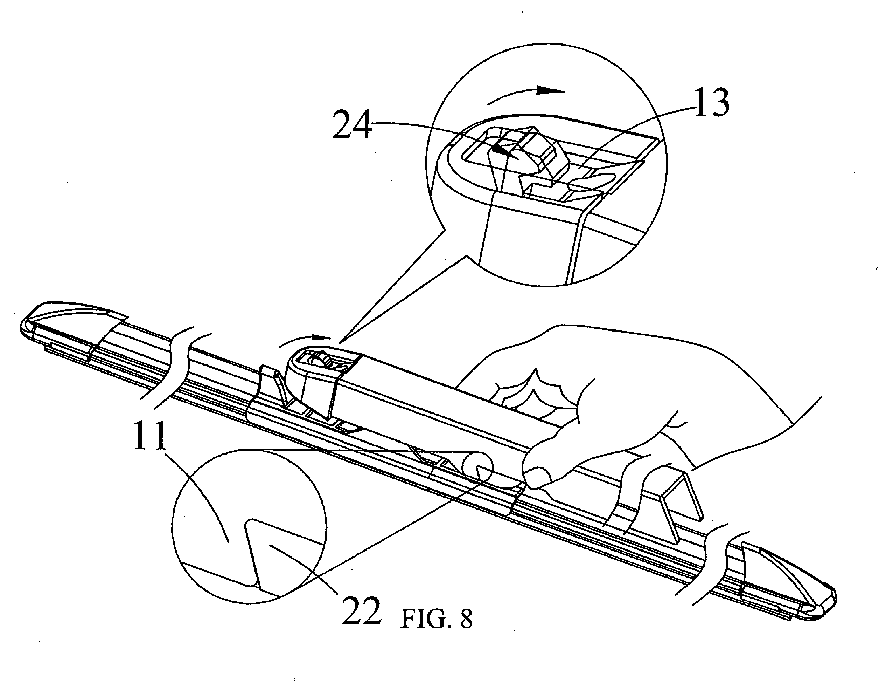

With reference to FIG. 5 to FIG. 8 for a first schematic diagram, a second schematic diagram, a third schematic diagram and a fourth schematic diagram of a windshield wiper connector and windshield wiper assembly in accordance with an embodiment of the invention are depicted. In the embodiment, a windshield wiper has been installed below the windshield wiper connector 2. If a user would like to assemble and combine the windshield wiper connector 2 and the windshield wiper arm 1, the windshield wiper arm 1 can be firstly placed above the windshield wiper connector 2 to allow the protruding portion 13 of the windshield wiper arm 1 to be toward a front of the main body 21 of the windshield wiper connector 2. Next, the first barb portion 11 and the second barb portion 12 of the windshield wiper arm 1 are firstly and respectively hooked with the first lodging portion 22 and the second lodging portion 23 of the windshield wiper connector 2. The windshield wiper arm 1 takes the hooking portion as an axis, and the front of the protruding portion 13 of the windshield wiper arm 1 is downwardly rotated. In the meantime, the protruding portion 21 of the windshield wiper arm 1 will gradually approach the flexible fastening body 24 of the windshield wiper connector 2. When the protruding portion 13 of the windshield wiper arm 1 is in contact with the guiding surface 2421 of the fastening portion 242 of the flexible fastening body 24, the protruding portion 13 is continuously rotated to prop the guiding surface 2421. Since the windshield wiper arm 1 is downwardly pushed by the pushing force, the flexible portion 21 of the flexible fastening body 24 performs a flexible deformation motion that is toward a direction being distant from the protruding portion 13. When the protruding portion 13 of the windshield wiper arm 1 crosses the fastening portion 242 along the guiding surface 2421 of the fastening portion 242, it would fall into the cavity 243 connected between the flexible portion 241 and the fastening portion 242. In the meantime, since the protruding portion 13 of the windshield wiper arm 1 does not push the fastening portion 242 of the flexible fastening body 24, the flexible portion 241 of the flexible fastening body 24 is flexibly restored from the deformed state such that the protruding portion 13 of the windshield wiper arm 1 leans against the cavity 243, and the fastening portion 242 of the flexible fastening body 24 is hooked with the protruding portion 13. The lodging motion of fastening the windshield wiper arm 1 to the windshield wiper connector 2 is completed.

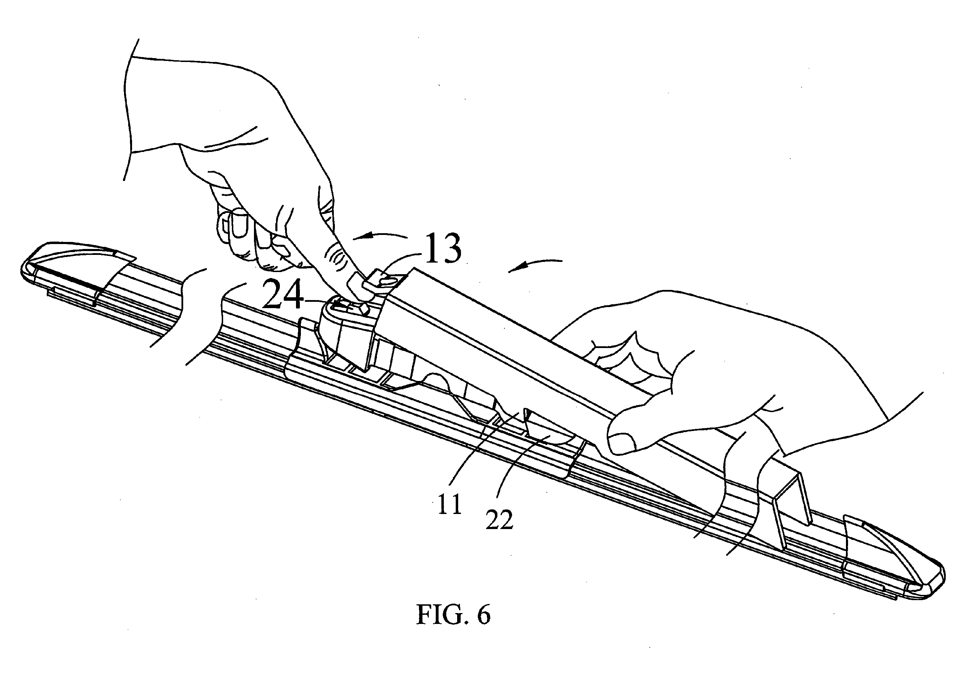

In the embodiment, since the windshield wiper connector 2 uses the flexible fastening body 24 with flexible material to fasten the protruding portion 13 of the windshield wiper arm 1, the size of the containing space 26 can allow the flexible fastening body 24 to perform a flexible deformation motion to facilitate the protruding portion 13 of the windshield wiper arm 1 crossing the fastening portion 242 of the flexible fastening body 24. Accordingly, the user does not need to impose magnitude forces to easily assemble and combine the windshield wiper arm 1 with the windshield wiper connector 2. A fewer interval is still retained between the first barb portion 11 and the second barb portion 12 of the windshield wiper arm 1 and the first lodging portion 22 and the second lodging portion 23 of the windshield wiper connector 2 as shown in FIG. 6. Therefore, the first barb portion 11 and the second barb portion 12 can be prevented from forcing and leaning against the first lodging portion 22 and the second lodging portion 23 to wear the first lodging portion 22 and the second lodging portion 23. When the connection between the windshield wiper arm 1 and the windshield wiper connector 2 is completed, the first lodging portion 22 and the second lodging portion 23 of the windshield wiper connector 2 can lean against the first barb portion 11 and the second barb portion 12 of the windshield wiper arm 1 to prevent the windshield wiper arm 1 from falling toward a rear direction of the main body 21 of the windshield wiper connector 2. The flexible fastening body 24 of the windshield wiper connector 2 can lean against the windshield wiper arm 1 to prevent the windshield wiper arm 1 from falling toward a front direction of the main body 21 of the windshield wiper connector 2. Since the fastening portion 242 of the flexible fastening body 24 is hooked with the protruding portion 13 of the windshield wiper arm 1, the windshield wiper arm 1 can be prevented from coming off an upper direction of the main body 21 of the windshield wiper connector 2.

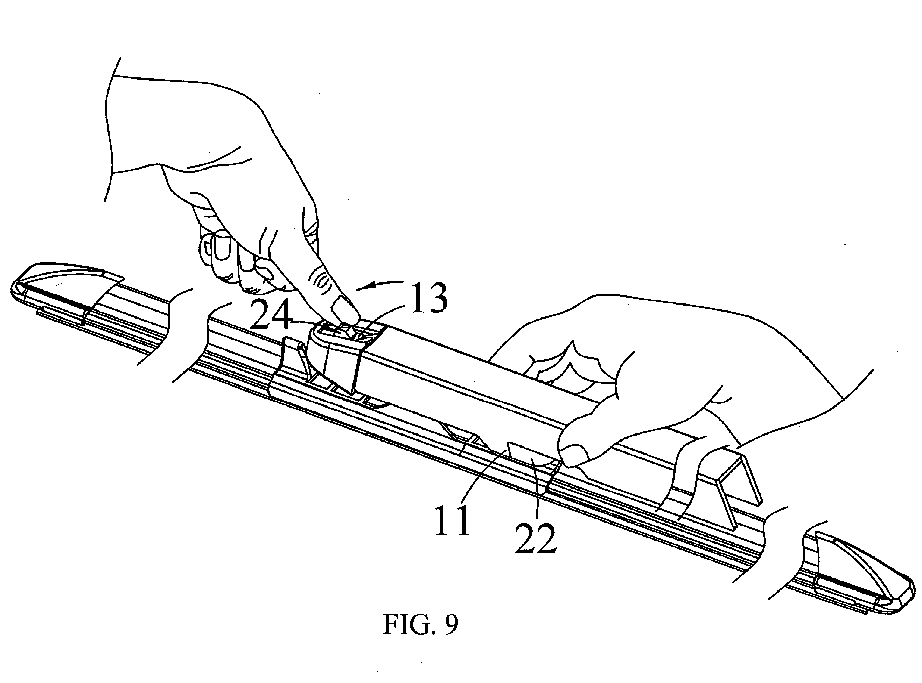

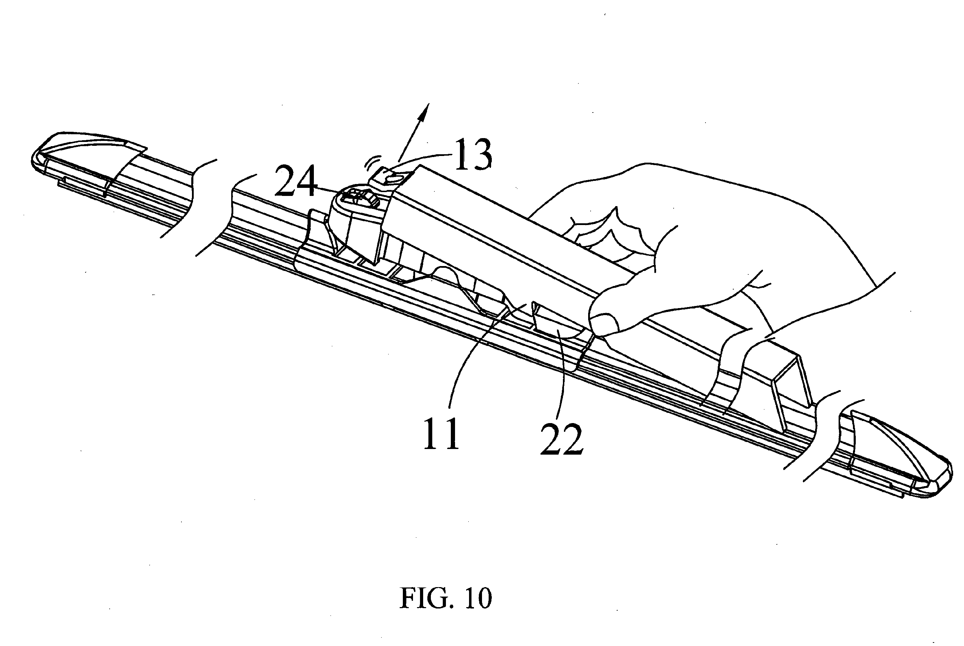

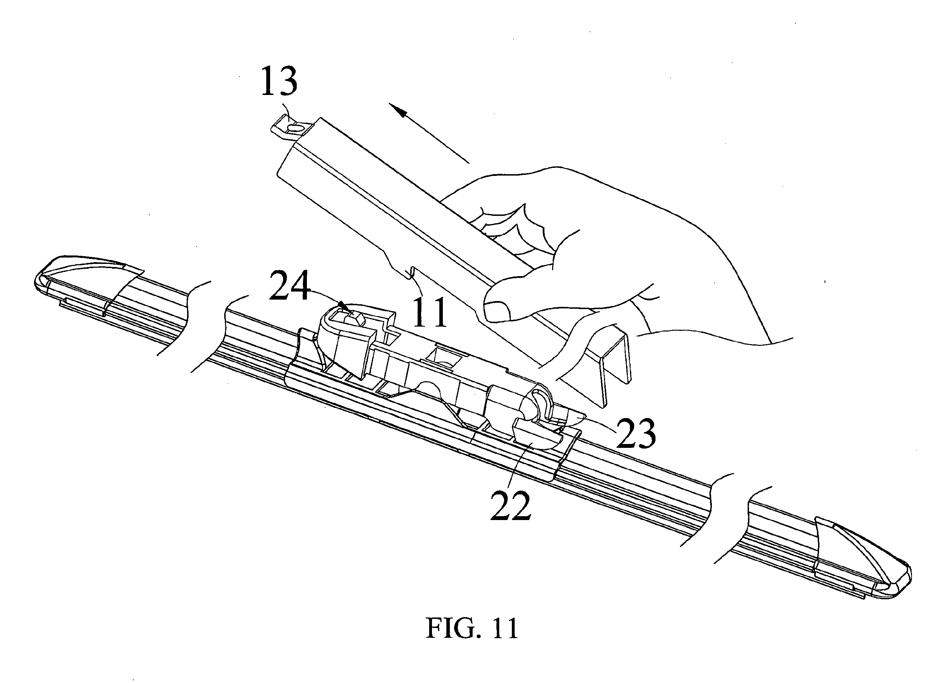

With reference to FIG. 9 to FIG. 11 for a first schematic diagram, a second schematic diagram and a third schematic diagram of detaching the windshield wiper arm from the windshield wiper arm in accordance with an embodiment of the invention are depicted. In the embodiment, if the user would like to detach the windshield wiper arm 1 from the windshield wiper connector 2, only needs to use fingers toggle the flexible fastening body 24 of the windshield wiper connector 2 to allow the protruding portion 13 of the windshield wiper arm 1 upwardly bouncing off so that both can be easily detached and separated.

The windshield wiper connector 2 of the invention can allow the user to conveniently connect the conventional windshield wiper arm 1. While detaching the windshield wiper arm 1 from the windshield wiper connector 2, the flexible fastening body 24 of the windshield wiper connector 2 is merely toggled to easily separate the windshield wiper connector 2 from the windshield wiper arm 1 so as to achieve the convenience regardless of assembly or detachment. With the flexible fastening body 24 of the windshield wiper connector 2 fastened to the protruding portion 13 of the windshield wiper arm 1 and the first lodging portion 22 and the second lodging portion 23 of the windshield wiper connector 2 leaning against the first barb portion 11 and the second barb portion 12 of the windshield wiper arm 1, the windshield wiper arm 1 is stably connected to the windshield wiper connector 2. Further, since the flexible fastening body 24, the first lodging portion 22 and the second lodging portion 23 are components made of flexible materials, the flexible fastening body 24 can be deformed at a direction. Accordingly, while detaching and assembling the windshield wiper connector 2 and the windshield wiper arm 1, a buffer can be obtained to greatly reduce the first barb portion 11 and the second barb portion 12 of the windshield wiper arm 1 damaging the first lodging portion 22 and the second lodging portion 23.

## Claims

1. A windshield wiper connector (2) comprising:
a main body (21);
a lodging device, disposed to a rear end of the main body (21), for mutually lodging a barb portion of a windshield wiper arm (1), wherein the lodging device is a flexible object; and
a flexible fastening body (24), one end of the flexible fastening **body (24)** being a flexible portion (241) connected below a front of the main body (21), the flexible portion (241) firstly extending downward toward a lower side of the main body (21) and then upward an upper side of the main body (21) to form a non-flat structure, and a substantially rectangular through hole being formed at a center portion of the non-flat structure, another end of the flexible fastening **body (24)** being an extending end upwardly extended from a near edge of the through hole toward the upper side of the main body **(21) and connected to fastening portion (242)**, and the flexible fastening **body (24)** being arranged for leaning against a protruding portion (13) with its fastening portion (242) of the windshield wiper arm (1);
wherein after the lodging device is lodged with the barb portion, the windshield wiper arm (1) is rotated by taking a lodging portion of the lodging device as an axis so that the extending end of the flexible fastening **body (24)** is propped by the protruding portion (13) to firstly perform a deformation toward a direction being distant from the protruding portion (13), and when the protruding portion (13) crosses the extending end, the extending end is restored from a deformation state to fasten the protruding portion (13) so as to fix the windshield wiper arm (1) on the main body (21) with the fastening portion (242).

2. The windshield wiper connector (2) as recited in claim 1, further comprising a containing portion (25) connecting the front of the main body (21) and forming a containing space (26), the flexible fastening **body (24)** located in the containing space (26).

3. The windshield wiper connector (2) as recited in claim 2, wherein the containing portion (25) is a U-shaped structure.

4. The windshield wiper connector (2) as recited in claim 2, wherein the flexible fastening **body (24)** comprises **the** flexible portion (241) and **the** fastening portion (242), and one end of the flexible portion (241) is disposed below the front of the main body (21), another end of the flexible portion (241) is extended toward the upper side of the main body (21) and connected to the fastening portion (242) to become the extending end, and the fastening portion (242) protrudes to the containing space (26), and the fastening portion (242) comprises a guiding surface (2421) for guiding the protruding portion (13) to cross the extending end when the extending end propped by the protruding portion (13) is deformed.

5. The windshield wiper connector (2) as recited in claim 4, wherein the flexible portion (241) and the fastening portion (242) are connected to form a cavity (243), and when the protruding portion (13) of the windshield wiper arm (1) is approached to the flexible fastening **body (24)**, the guiding surface (2421) is propped by the protruding portion (13) to allow the flexible portion (241) performs the deformation toward the direction being distant from the protruding portion (13), and when the protruding portion (13) crosses the extending end and falls into the cavity (243) to mutually leaning against each other, the fastening portion (242) is hooked with the protruding portion (13).

6. The windshield wiper connector (2) as recited in claim 1, wherein the lodging device is connected to two sides of the rear of the main body (21).

7. The windshield wiper connector (2) as recited in claim 1, wherein the main body (21) is an elongated structure.

8. The windshield wiper connector (2) as recited in claim 1, wherein the barb portion is disposed at two ends of the windshield wiper arm (1), and the protruding portion (13) is disposed to one end of the windshield wiper arm (1).

9. **The windshield wiper connector (2) as recited in claim 1, wherein**
two sides of a rear of the main body (21) disposed with a first lodging portion (22) and a second lodging portion (23), a front of the main body (21) disposed with a flexible fastening body (24), the flexible fastening body (24) comprising **the** flexible portion (241) and **the** fastening portion (242), the fastening portion (242) further comprising a guiding surface (2421), wherein the first lodging portion (22) and the second lodging portion (23) are flexible objects; and
two sides of the windshield wiper arm (1) having a first barb portion (11) and a second barb portion (12) and corresponding to the first lodging portion (22) and the second lodging portion (23), one end of the windshield wiper arm (1) having **the** protruding portion (13);
wherein the first lodging portion (22) and the second lodging portion (23) are respectively hooked with the first barb portion (11) and the second barb portion (12), and the windshield wiper arm (1) is rotated by taking a hooking portion as an axis so that the protruding portion (13) is gradually approached to the guiding surface (2421) of the fastening portion (242) and mutually leans against each other to allow the flexible portion (241) performing a deformation toward a direction being distant from the protruding portion (13), and after the protruding portion (13) crosses the fastening portion (242) and is restored from the deformation, the fastening portion (242) is fastened with the protruding portion (13) so as to fix the windshield wiper arm (1) on the main body (21).

10. The windshield wiper connection assembly as recited in claim 9, further comprising a containing portion (25) connecting the front of the main body (21) and forming a containing space (26), the flexible fastening body (24) located in the containing space (26).

11. The windshield wiper connection assembly as recited in claim 10, wherein the containing portion (25) is a U-shaped structure.

12. The windshield wiper connection assembly as recited in claim 10, wherein one end of the flexible portion (241) is disposed below the front of the main body (21), another end of the flexible portion (241) is extended toward an upper side of the main body (21) and connected to the fastening portion (242) to become an extending end, and the fastening portion (242) protrudes to the containing space (26), and when the extending end propped by the protruding portion (13) is deformed, the guiding surface (2421) is in contact with the protruding portion (13) and guides the protruding portion (13) to cross the extending end.

13. The windshield wiper connection assembly as recited in claim 12, wherein the flexible portion (241) and the fastening portion (242) are connected to form a cavity (243), and when the protruding portion (13) leans against the guiding surface (2421) to allow the flexible portion (241) to perform the deformation toward the direction being distant from the protruding portion (13), the protruding portion (13) crosses the fastening portion (242) and falls into the cavity (243) from the guiding surface (2421), and the fastening portion (242) is fastened with the protruding portion (13).

## Patentansprüche

1. Scheibenwischer-Anschlussteil (2), umfassend:
einen Hauptkörper (21);
eine hin zu einem hinteren Ende des Hauptkörpers (21) angeordnete Steckvorrichtung zum Zusammenstecken mit einem Widerhakenabschnitt eines Scheibenwischerarms (1), wobei die Steckvorrichtung als ein flexibles Element ausgebildet ist; und
einen flexiblen Befestigungskörper (24), wobei ein Ende des flexiblen Befestigungskörpers (24) als ein flexibler Abschnitt (241) ausgebildet ist, der unter einer Vorderseite des Hauptkörpers (21) befestigt ist, der flexible Abschnitt (241) sich zunächst nach unten zu einer Unterseite des Hauptkörpers (21) und dann nach oben zu einer Oberseite des Hauptkörpers (21) erstreckt, um eine unebene Struktur zu bilden, wobei ein im Wesentlichen rechteckiges Durchgangsloch in einem mittleren Abschnitt der unebenen Struktur gebildet ist, ein anderes Ende des flexiblen Befestigungskörpers (24) als ein verlängertes Ende ausgebildet ist, das sich von einer hinteren Kante des Durchgangslochs nach oben zu der Oberseite des Hauptkörpers (21) erstreckt und mit einem Befestigungsabschnitt (242) verbunden ist, und der flexible Befestigungskörper (24) so angeordnet ist, dass er sich mit seinen Befestigungsabschnitt (242) gegen einen Vorsprungsabschnitt (13) des Scheibenwischerarms (1) lehnt;
wobei der Scheibenwischerarm (1) nach dem Zusammenstecken der Steckvorrichtung mit dem Widerhakenabschnitt gedreht wird, indem ein Steckabschnitt der Steckvorrichtung als eine Achse verwendet wird, so dass das verlängerte Ende des flexiblen Befestigungskörpers (24) von dem Vorsprungsabschnitt (13) abgestützt wird, um zunächst eine Verformung in eine von dem Vorsprungsabschnitt (13) entfernte Richtung zu vollziehen, und das verlängerte Ende beim Überschreiten des verlängerten Endes durch den Vorsprungsabschnitt (13) aus einem verformten Zustand zurückgestellt wird, um den Vorsprungsabschnitt (13) zu befestigen und so den Scheibenwischerarm (1) mit dem Befestigungsabschnitt (242) am Hauptkörper (21) zu befestigen.

2. Scheibenwischer-Anschlussteil (2) nach Anspruch 1, weiterhin umfassend einen Fassungsabschnitt (25), der mit der Vorderseite des Hauptkörpers (21) verbunden ist und einen Fassungsraum (26) bildet, wobei der flexible Befestigungskörper (24) in dem Fassungsraum (26) angeordnet ist.

3. Scheibenwischer-Anschlussteil (2) nach Anspruch 2, wobei der Fassungsabschnitt (25) als U-förmige Struktur ausgebildet ist.

4. Scheibenwischer-Anschlussteil (2) nach Anspruch 2, wobei der flexible Befestigungskörper (24) den flexiblen Abschnitt (241) und den Befestigungsabschnitt (242) umfasst und ein Ende des flexiblen Abschnitts (241) unter der Vorderseite des Hauptkörpers (21) angeordnet ist, ein anderes Ende des flexiblen Abschnitts (241) sich zu der Oberseite des Hauptkörpers (21) erstreckt und mit dem Befestigungsabschnitt (242) verbunden ist, um das verlängerte Ende zu bilden, und wobei der Befestigungsabschnitt (242) zu dem Fassungsraum (26) vorsteht und der Befestigungsabschnitt (242) eine Führungsfläche (2421) zum Führen des Vorsprungsabschnitts (13) umfasst, so dass dieser das verlängerte Ende überschreitet, wenn das von dem Vorsprungsabschnitt (13) abgestützte verlängerte Ende verformt wird.

5. Scheibenwischer-Anschlussteil (2) nach Anspruch 4, wobei der flexible Abschnitt (241) und der Befestigungsabschnitt (242) miteinander verbunden sind, um einen Hohlraum (243) zu bilden, und wobei die Führungsfläche (2421) beim Annähern des Vorsprungsabschnitts (13) des Scheibenwischerarms (1) an den flexiblen Befestigungskörper (24) durch den Vorsprungsabschnitt (13) abgestützt wird, um die Verformung des flexiblen Abschnitts (241) in der von dem Vorsprungsabschnitt (13) entfernten Richtung zu ermöglichen, und wobei der Befestigungsabschnitt (242) in den Vorsprungsabschnitt (13) eingehakt wird, wenn der Vorsprungsabschnitt (13) das verlängerte Ende überschreitet und in den Hohlraum (243) fällt, so dass sich diese aneinander anlehnen.

6. Scheibenwischer-Anschlussteil (2) nach Anspruch 1, wobei die Steckvorrichtung mit zwei Seiten des hinteren Teils des Hauptkörpers (21) verbunden ist.

7. Scheibenwischer-Anschlussteil (2) nach Anspruch 1, wobei der Hauptkörper (21) als längliche Struktur ausgebildet ist.

8. Scheibenwischer-Anschlussteil (2) nach Anspruch 1, wobei der Widerhakenabschnitt an zwei Enden des Scheibenwischerarms (1) angeordnet ist und der Vorsprungsabschnitt (13) an einem Ende des Scheibenwischerarms (1) angeordnet ist.

9. Scheibenwischer-Anschlussteil (2) nach Anspruch 1, wobei zwei Seiten einer Rückseite des Hauptkörpers (21) einen ersten Steckabschnitt (22) und einen zweiten Steckabschnitt (23) aufweisen, eine Vorderseite des Hauptkörpers (21) einen flexiblen Befestigungskörper (24) aufweist, der flexible Befestigungskörper (24) den flexiblen Abschnitt (241) und den Befestigungsabschnitt (242) umfasst und der Befestigungsabschnitt (242) weiterhin eine Führungsfläche (2421) umfasst, wobei der erste Steckabschnitt (22) und der zweite Steckabschnitt (23) als flexible Elemente ausgebildet sind; und
wobei zwei Seiten des Scheibenwischerarms (1) einen ersten Widerhakenabschnitt (11) und einen zweiten Widerhakenabschnitt (12) aufweisen und dem ersten Steckabschnitt (22) und dem zweiten Steckabschnitt (23) entsprechen und ein Ende des Scheibenwischerarms (1) den Vorsprungsabschnitt (13) aufweist;
wobei der erste Widerhakenabschnitt (11) und der zweite Widerhakenabschnitt (12) in den ersten Steckabschnitt (22) bzw. in den zweiten Steckabschnitt (23) eingehakt werden und der Scheibenwischerarm (1) unter Verwendung eines Hakenabschnitts als eine Achse gedreht wird, so dass der Vorsprungsabschnitt (13) allmählich an die Führungsfläche (2421) des Befestigungsabschnitts (242) angenähert wird und sich diese gegeneinander lehnen, um dem flexiblen Teil (241) eine Verformung in einer von dem Vorsprungsabschnitt (13) entfernten Richtung zu ermöglichen, und wobei der Befestigungsabschnitt (242) nach dem Überqueren des Befestigungsabschnitts (242) durch den Vorsprungsabschnitt (13) und der Wiederherstellung des Vorsprungsabschnitts (13) aus der Verformung mit dem Vorsprungsabschnitt (13) befestigt wird, um so den Scheibenwischerarm (1) am Hauptkörper (21) zu fixieren.

10. Scheibenwischer-Anschlussanordnung nach Anspruch 9, weiterhin umfassend einen Fassungsabschnitt (25), der mit der Vorderseite des Hauptkörpers (21) verbunden ist und einen Fassungsraum (26) bildet, wobei der flexible Befestigungskörper (24) in dem Fassungsraum (26) angeordnet ist.

11. Scheibenwischer-Anschlussanordnung nach Anspruch 10, wobei der Fassungsabschnitt (25) U-förmig ausgebildet ist.

12. Scheibenwischer- Anschlussanordnung nach Anspruch 10, wobei ein Ende des flexiblen Abschnitts (241) unter der Vorderseite des Hauptkörpers (21) angeordnet ist und sich ein anderes Ende des flexiblen Abschnitts (241) zu einer Oberseite des Hauptkörpers (21) erstreckt und mit dem Befestigungsabschnitt (242) verbunden ist, um ein verlängertes Ende zu bilden, und wobei der Befestigungsabschnitt (242) zum Fassungsraum (26) vorsteht, und die Führungsfläche (2421) beim Verformen des durch den Vorsprungsabschnitt (13) abgestützten verlängerten Endes an dem Vorsprungsabschnitt (13) anliegt und den Vorsprungsabschnitt (13) führt, so dass dieser das verlängerte Ende überquert.

13. Scheibenwischer- Anschlussanordnung nach Anspruch 12, wobei der flexible Abschnitt (241) und der Befestigungsabschnitt (242) miteinander verbunden sind, um einen Hohlraum (243) zu bilden, und wobei der Vorsprungsabschnitt (13), wenn er sich gegen die Führungsfläche (2421) lehnt, um dem flexiblen Abschnitt (241) die Verformung in die von dem Vorsprungsabschnitt (13) entfernte Richtung zu ermöglichen, den Befestigungsabschnitt (242) überquert und von der Führungsfläche (2421) in den Hohlraum (243) fällt, und der Befestigungsabschnitt (242) mit dem Vorsprungsabschnitt (13) befestigt wird.

## Revendications

1. Connecteur d'essuie-glace (2) comprenant :
un corps principal (21) ;
un dispositif de logement, disposé à une extrémité arrière du corps principal (21), pour y loger mutuellement une partie barbelée d'un bras d'essuie-glace (1), dans lequel le dispositif de logement est un objet souple ; et
un corps de fixation souple (24), une extrémité du corps de fixation souple (24) étant une partie souple (241) reliée au-dessous de la face avant du corps principal (21), la partie souple (241) se prolongeant premièrement vers le bas vers un côté inférieur du corps principal (21) et puis vers le haut vers un côté supérieur du corps principal (21) pour former une structure non plate, et un trou perforant substantiellement rectangulaire étant formé sur une partie centrale de la structure non plate, une autre extrémité du corps de fixation souple (24) étant une extrémité en extension prolongée vers le haut à partir d'un bord arrière du trou perforant vers le côté supérieur du corps principal (21) et reliée à une partie de fixation (242), et le corps de fixation souple (24) étant disposé pour s'adosser contre une partie saillante (13) du bras d'essuie-glace (1) avec sa partie de fixation (242);
dans lequel, après que le dispositif de logement à logé la partie barbelée, le bras d'essuie-glace (1) est tourné en utilisant une partie de logement du dispositif de logement comme un axe de sorte que l'extrémité en extension du corps de fixation souple (24) est soutenue par la partie saillante (13) pour effectuer premièrement une déformation dans une direction étant distante de la partie saillante (13), et quand la partie saillante (13) traverse l'extrémité en extension, l'extrémité en extension est restaurée d'un état de déformation pour attacher la partie saillante (13) de façon à fixer le bras d'essuie-glace (1) sur le corps principal (21) avec la partie de fixation (242).

2. Connecteur d'essuie-glace (2) selon la revendication 1, comprenant en outre une partie réceptrice (25) reliant la face avant du corps principal (21) et formant un espace récepteur (26), le corps de fixation souple (24) étant situé dans l'espace récepteur (26).

3. Connecteur d'essuie-glace (2) selon la revendication 2, dans lequel la partie réceptrice (25) est une structure en forme de U.

4. Connecteur d'essuie-glace (2) selon la revendication 2, dans lequel le corps de fixation souple (24) comprend la partie souple (241) et la partie de fixation (242), et une extrémité de la partie souple (241) est disposée au-dessous de la face avant du corps principal (21), une autre extrémité de la partie souple (241) se prolonge vers le côté supérieur du corps principal (21) et est reliée à la partie de fixation (242) pour devenir l'extrémité en extension, et la partie de fixation (242) fait saillie vers l'espace récepteur (26), et la partie de fixation (242) comprend une surface de guidage (2421) pour guider la partie saillante (13) pour traverser l'extrémité en extension quand l'extrémité en extension soutenue par la partie saillante (13) est déformée.

5. Connecteur d'essuie-glace (2) selon la revendication 4, dans lequel la partie souple (241) et la partie de fixation (242) sont reliées pour former une cavité (243), et quand la partie saillante (13) du bras d'essuie-glace (1) est approchée du corps de fixation souple (24), la surface de guidage (2421) est soutenue par la partie saillante (13) pour permettre à la partie souple (241) d'effectuer la déformation dans la direction étant distante de la partie saillante (13), et quand la partie saillante (13) traverse l'extrémité en extension et tombe dans la cavité (243) pour s'adosser mutuellement l'une contre l'autre, la partie de fixation (242) est accrochée avec la partie saillante (13).

6. Connecteur d'essuie-glace (2) selon la revendication 1, dans lequel le dispositif de logement est relié aux deux côtés de l'arrière du corps principal (21).

7. Connecteur d'essuie-glace (2) selon la revendication 1, dans lequel le corps principal (21) est une structure allongée.

8. Connecteur d'essuie-glace (2) selon la revendication 1, dans lequel la partie barbelée est disposée à deux extrémités du bras d'essuie-glace (1), et la partie saillante (13) est disposée à une extrémité du bras d'essuie-glace (1).

9. Connecteur d'essuie-glace (2) selon la revendication 1, dans lequel deux côtés d'un arrière du corps principal (21) sont disposés d'une première partie de logement (22) et d'une seconde partie de logement (23), un devant du corps principal (21) est disposée d'un corps de fixation souple (24), le corps de fixation souple (24) comprenant la partie souple (241) et la partie de fixation (242), la partie de fixation (242) comprenant en outre une surface de guidage (2421), dans lequel la première partie de logement (22) et la seconde partie de logement (23) sont des objets souples ; et
deux côtés du bras d'essuie-glace (1) ayant une première partie barbelée (11) et une seconde partie barbelée (12) et correspondant à la première partie de logement (22) et la seconde partie de logement (23), une extrémité du bras d'essuie-glace (1) ayant la partie saillante (13) ;
dans lequel la première partie de logement (22) et la seconde partie de logement (23) sont respectivement accrochées avec la première partie barbelée (11) et la seconde partie barbelée (12), et le bras d'essuie-glace (1) est tourné en utilisant une partie d'accrochage comme un axe de sorte que la partie saillante (13) est approchée graduellement de la surface de guidage (2421) de la partie de fixation (242) et s'adosse mutuellement l'une contre l'autre pour permettre à la partie souple (241) d'effectuer une déformation dans une direction étant distante de la partie saillante (13), et après que la partie saillante (13) a traversée la partie de fixation (242) et est restaurée de la déformation, la partie de fixation (242) est attachée avec la partie saillante (13) de façon à fixer le bras d'essuie-glace (1) sur le corps principal (21).

10. Ensemble de connexion d'essuie-glace selon la revendication 9, comprenant en outre une partie réceptrice (25) reliant le devant du corps principal (21) et formant un espace récepteur (26), le corps de fixation souple (24) étant situé dans l'espace récepteur (26).

11. Ensemble de connexion d'essuie-glace selon la revendication 10, dans lequel la partie réceptrice (25) est une structure en forme de U.

12. Ensemble de connexion d'essuie-glace selon la revendication 10, dans lequel une extrémité de la partie souple (241) est disposée au-dessous du devant du corps principal (21), une autre extrémité de la partie souple (241) est prolongée vers un côté supérieur du corps principal (21) et reliée à la partie de fixation (242) pour devenir une extrémité en extension, et la partie de fixation (242) fait saillie vers l'espace récepteur (26), et quand l'extrémité en extension soutenue par la partie saillante (13) est déformée, la surface de guidage (2421) est en contact avec la partie saillante (13) et guide la partie saillante (13) pour traverser l'extrémité en extension.

13. Ensemble de connexion d'essuie-glace selon la revendication 12, dans lequel la partie souple (241) et la partie de fixation (242) sont reliées pour former une cavité (243), et quand la partie saillante (13) se penche vers la surface de guidage (2421) pour permettre à la partie souple (241) d'effectuer la déformation dans la direction étant distante de la partie saillante (13), la partie saillante (13) traverse la partie de fixation (242) et tombe dans la cavité (243) à partir de la surface de guidage (2421), et la partie de fixation (242) est attachée avec la partie saillante (130).
